# EUROPÄISCHE PATENTANMELDUNG

(11) **EP 1 491 385 A1**
(43) Veröffentlichungstag der Anmeldung: **29.12.2004**
(21) Anmeldenummer: 04013808.3
(22) Anmeldetag: 11.06.2004
(51) Int. Cl.: B60L 5/20

(54) **Schleifleiste aus Kohlenstoff mit einem geringen Anteil an dünnen metallischen Leitern**

(30) Priorität: 24.06.2003 DE 10328546
(71) Anmelder: SGL CARBON AG, 65203 Wiesbaden (DE)
(72) Erfinder: Fischer, Ludger Dr., 53343 Wachtberg (DE); Vesper, Wolfgang Dr., 53115 Bonn (DE)

(57) **Zusammenfassung**

Ein Materialverbund ist aus einer Matrix von gebranntem Kohlenstoff 1 mit wärmebehandeltem Binder und einem geringen Anteil lagenweise enthaltener dünner metallischer Leiter 2 aufgebaut. Aus dem Verbund werden Rohlinge in der richtigen Orientierung geschnitten und zu Schleifleisten 7 fertig bearbeitet, die zur gleitenden Stromabnahme zwecks Betrieb von Fahrzeugen mit Elektromotoren verwendet werden. Der Verbund ist durch eine niedrige Dichte von ≤ 2,3g/cm³ und durch einen parallel zu den Lagen der dünnen metallischen Leiter 2 gemessenen mittleren spezifischen elektrischen Widerstand von ≤ 3µΩm charakterisiert. Aus dem Verbund gefertigte Schleifleisten 7 haben bei angepasstem Metallanteil eine hohe Stromtragfähigkeit. Eine Stromdichte von bis zu 74A/cm² bringt eine Erhöhung der Beharrungstemperatur von kleiner oder gleich 130°C hervor.

## Beschreibung

Gegenstand der Erfindung ist ein Materialverbund für Schleifleisten zur gleitenden Stromabnahme zwecks Betrieb von Fahrzeugen mit Elektromotoren, bestehend aus Kohlenstoff mit wärmebehandeltem Binder und aus lagenweise darin eingebundenen dünnen metallischen Leitern.

Schienengebundene, mit Elektromotoren betriebene Fahrzeuge erhalten den notwendigen Strom meist über eine Schleifleiste, die auf einem Tragelement eines Pantographen auf dem Fahrzeug montiert ist. Die Schleifleiste berührt die ortsfeste, in Fahrtrichtung angeordnete Stromzuführung - meist ein Fahrdraht -, und gleitet beim Fahren des Fahrzeugs an der Stromzuführung bzw. am Fahrdraht entlang. Bei Schienenfahrzeugen kann man nicht davon ausgehen, dass der Abstand zwischen Schiene und Fahrdraht auf der gesamten Fahrstrecke konstant ist. Geringe Abstandsänderungen zwischen Schiene und Fahrdraht werden während der Fahrt durch den Pantographen ausgeglichen.

Bei geringen Fahrzeuggeschwindigkeiten ist die Geschwindigkeit der Ausgleichsbewegung des Pantographen schnell genug, um die Schleifleiste stets an den Fahrdraht anzudrücken und so den Stromübergang zu ermöglichen. Dabei werden die senkrecht zur Längsachse des Fahrdrahtes auf diesen ausgeübten Kräfte im wesentlichen durch die im Pantographen eingestellten Spannkräfte bestimmt.
Bei hohen Fahrzeuggeschwindigkeiten treten zu den aus den Spannkräften des Pantographen resultierenden Kräften weitere hinzu. Diese resultieren zu einem erheblichen Anteil aus der Massenträgheit der Bauteile des Pantographen. Tragelement ― häufig auch als "Träger" oder "Schleifleistenträger" bezeichnet - und Schleifleiste tendieren wegen ihrer Trägheit, in konstantem Abstand zur Schiene zu verharren.

Ändert sich beim Fahren der Abstand zwischen Fahrdraht und Schiene abrupt, so erhält die Schleifleiste im Falle einer Abstandsverminderung eine schlagartige Belastung und im Falle einer Abstandsvergrößerung kann sogar kurzfristig der Kontakt zwischen Fahrdraht und Schleifleiste verloren gehen, weil die Ausgleichsbewegung des Pantographen mit Träger und Schleifleiste nicht schnell genug ist. Beide Effekte fallen schwächer aus, wenn die Trägheiten von Träger und Schleifleiste klein sind. Daher werden kleine Massen von Träger und Schleifleiste gewünscht.
Gemessen an der Dichte gängiger, elektrisch gut leitfähiger Metalle ist die Dichte der Kohlenstoffe von Schleifleisten gering. Um jedoch eine ausreichende elektrische Leitfähigkeit beziehungsweise einen niedrigen elektrischen Widerstand dieser Kohlenstoffe zu erhalten, benötigen diese Kohlenstoffe Metalle als Additiv. Meist werden die Metalle in Form einer Metallimprägnierung des porösen Kohlenstoffes zugegeben, womit diese Werkstoffverbunde eine Dichte aufweisen, die über der von nicht mit Metall imprägnierten Kohlenstoffen liegt. Damit ist die Trägheit solcher Schleifleisten höher als die Trägheit von nur aus Kohlenstoff bestehenden Schleifleisten.
Neben der Massenträgheit und neben dem niedrigen elektrischen Widerstand ist die Erwärmung der Schleifleiste im Betrieb eine zu beachtende Größe. Die Schleifleiste darf sich bei hohen Strömen nicht übermäßig erwärmen. Andernfalls werden die Schleifleiste selber, der Fahrdraht oder die Klebung, mit der die Schleifleiste in vielen Fällen am Träger befestigt ist, geschädigt.

Es sind verschiedene Wege beschritten worden, ein Optimum von ausreichender elektrischer Leitfähigkeit beziehungsweise von niedrigem spezifischem elektrischem Widerstand und weiteren technisch wichtigen Eigenschaften von aus Kohlenstoff bestehenden Schleifleisten zu erreichen. Wichtig sind geringer Abrieb an Fahrdraht und / oder Schleifleiste und gute Gleiteigenschaften der Schleifleiste. Die Ziele einer niedrigen Dichte solcher Werkstoffe beziehungsweise das daraus ableitbare Ziel einer niedrigen Trägheit von aus solchen Werkstoffen gefertigten Schleifleisten bei gleichzeitig niedrigem spezifischem elektrischem Widerstand der Schleifleisten sind bisher nicht formuliert worden.

In der japanischen Schrift JP 1270571 (1989) wird ein Schleifleistenwerkstoff mit niedrigem spezifischem elektrischem Widerstand dargestellt. Der niedrige spezifische elektrische Widerstand wird durch die Einlagerung von Kupferdrahtgeweben in die Kohlenstoffmatrix und durch die Imprägnierung eines in der Kohlenstoffinatrix vorhandenen Porensystems mit einer niedrig schmelzenden Legierung aus z. B. Kupfer-Zinn erreicht. Damit wird das in dieser Schrift formulierte Ziel erreicht, einen Schleifleistenwerkstoff mit guten Selbstschmiereigenschaften zu erhalten. Durch die Imprägnierung mit Kupfer-Zinn erhält dieser Werkstoff einen relativ hohen Metallgehalt und die Dichte dieses Schleifleistenwerkstoffes beträgt mindestens 3,2 g/cm³. Es ist daher nicht das Ziel der japanischen Erfinder, einen Werkstoff mit niedriger Dichte und damit eine Schleifleiste mit niedriger Massenträgheit zu erreichen.

In den japanischen Schriften JP 4207903 und JP 4207904 werden Schleifleistenwerkstoffe mit niedrigen spezifischen elektrischen Widerständen und zugleich hohen Bruchzähigkeiten dargestellt. Die hohen Bruchzähigkeiten werden durch die Zugabe metallischer Fasern mit einem Anteil von 5 bis 60Vol.% der Mischung aus Kohlenstoff und Fasern erreicht. Vorzugsweise liegt der Faservolumenanteil bei 10 bis 45Vol.-%. Im Falle der Schrift JP 4207903 werden die metallischen Fasern in einem zusätzlichen Wärmebehandlungsprozess abgeschreckt.
Im Gegensatz zur vorliegenden Erfindung handelt es sich bei beiden Schriften um metallische Kurzfasern, nicht um Endlos-Fasern. Dies hat zur Folge, dass ein relativ hoher Faseranteil benötigt wird, um die Kontakte der Fasern untereinander sicher zu stellen und auf diese Weise Strompfade mit niedrigem elektrischem Widerstand zu erreichen. Dies bedeutet einen hohen Metallanteil und damit zugleich eine relativ hohe Dichte, die Kohlenstoff-Werkstoffen mit der erfindungsgemäßen Dichte entgegensteht.

In der japanischen Schrift JP 4280865 wird ein Schleifleistenwerkstoff mit sehr guten Schlagzähigkeiten und Gleiteigenschaften beschrieben. Der Schleifleistenwerkstoff besteht aus Kohlenstoffmaterial und Metallfasern und/oder Metallpulver. Dabei sind die Metallfasern ― auch in verschiedener textiler Aufinachung ― asymmetrisch in der Schleifleiste angeordnet. Wenn die Schleifleiste auf dem Tragelement des Pantographen montiert ist, sind die Metallfasern zu der dem Fahrdraht abgewandten Seite orientiert beziehungsweise zu der dem Träger zugewandten Seite orientiert. Der Gehalt an Metallfasern ist hoch. An einer Stelle der Schrift wird er mit 30Vol.-% angegeben. Entsprechend hoch fällt die Dichte dieser Werkstoffverbunde aus. In Tabelle 1 werden Werte von 3,8 bis 4,0 g/cm³ angegeben. Schleifleisten dieser Art gleiten gut, sie sind auch schlagzäh, aber sie haben eine vergleichsweise hohe Dichte, besitzen damit eine hohe Massenträgheit und weisen keinen besonders niedrigen spezifischen elektrischen Widerstand auf.

Der der vorliegenden Erfindung nächstliegende Stand der Technik wird offenbar in der japanischen Schrift JP 2000-037001 beschrieben. Ein kohlenstoffreiches Material für die gleitende Stromabnahme enthält schichtförmig metallische Leiter. Die metallischen Leiter sind z. B. Faserbündel, die durch textile Prozesse ― wie z. B. Weben ― in flächige Gebilde umgesetzt werden. Innerhalb einer Ebene der metallischen Leiter fließt der elektrische Strom praktisch ungehindert. Von einer solchen Ebene zur nächsten ist der Stromfluss jedoch durch den relativ hohen spezifischen elektrischen Widerstand des Matrixkohlenstoffes gering. Um diese Situation zu verbessern, enthält das kohlenstoffreiche Material metallische Stifte, die die Ebenen der metallischen Leiter im wesentlichen senkrecht durchsetzen und elektrisch miteinander verbinden. Obwohl mit den schichtförmigen, metallischen Leitern relativ wenig Metall im Gesamtwerkstoff enthalten ist, wird in JP 2000-037001 kein Mindest-Metallgehalt des nach Anspruch 15 gefertigten Werkstoffes definiert und beansprucht, um eine gute Stromleitung zu sichern. Es wird auch keine Obergrenze für die Dichte des Gesamtwerkstoffes und kein höchster spezifischer elektrischer Widerstand definiert und beansprucht. Es wird auch keine in allen Richtungen durchgängige Kohlenstoffmatrix des fertigen Werkstoffes beansprucht, weil die Schichtung des fertigen Werkstoffes schon bei der Herstellung durch den Laminiervorgang der Kohlenstoffschichten und der metallischen Leiter sowie durch die temporären Kleberschichten zwischen den Lagen vorgeprägt wird.

Die Aufgabe der dieser Patentanmeldung zu Grunde liegenden Erfindung war es deshalb, einen Materialverbund zu schaffen, der neben einem geringen Abrieb an Fahrdraht und / oder Schleifleiste und neben guten Gleiteigenschaften insbesondere eine Dichte von kleiner oder gleich 2,3g/cm³, insbesondere einen parallel zu den Lagen der dünnen metallischen Leiter gemessenen mittleren spezifischen elektrischen Widerstand von kleiner oder gleich 3µΩm und eine hohe Stromtragfähigkeit (Definition siehe unten) aufweist.

Im Gegensatz zum nächstliegenden Stand der Technik nach der japanischen Schrift JP 2000-037001 hat der erfindungsgemäße Materialverbund eine in allen Richtungen durchgängige Kohlenstoffmatrix. In JP 2000-037001 und anderen Schriften wird eine Laminatstruktur etwa durch eingebrachte dichte Gewebe oder Bleche beschrieben. Daher besteht bei der Herstellung des erfindungsgemäßen Materialverbundes, insbesondere beim Brennen, und bei der Verwendung nicht das Risiko der Delamination. Die Delamination könnte beim Brennen durch unterschiedliche Wärmeausdehnungskoeffizienten und bei der Verwendung durch schlagartige Belastungen im Fahrbetrieb verursacht werden.

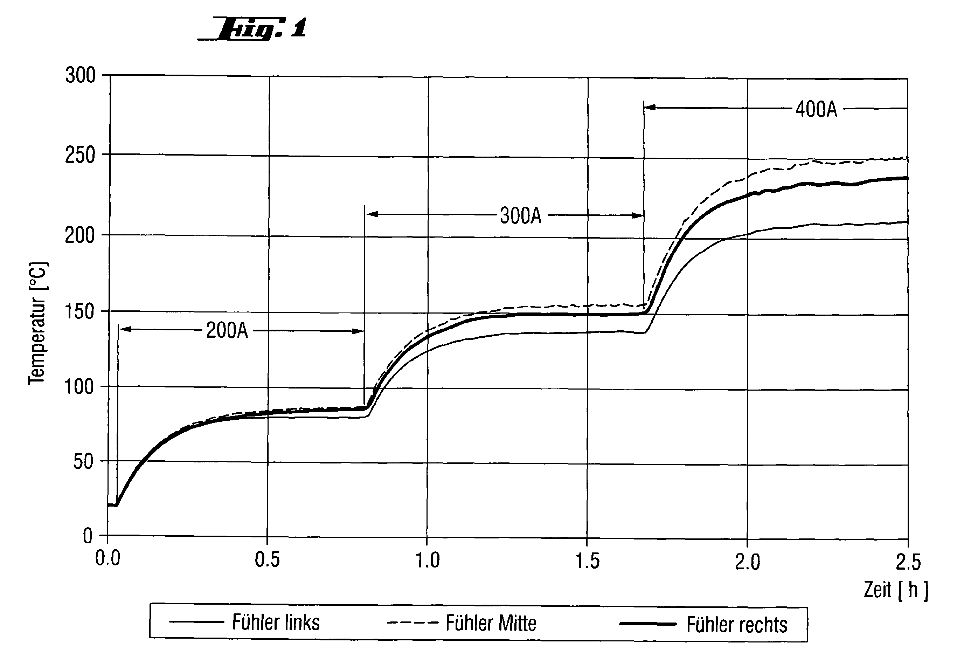

Die Begriffe im folgenden Text sind so zu verstehen:
- Der Widerstand des Materialverbundes wird in Anlehnung an *DIN IEC 413, Abschnitt 402* aus den folgenden Angaben errechnet. An den Proben werden die durchfließende Stromstärke, der Spannungsabfall, die Messlänge und der Querschnitt gemessen. Bei der Ermittlung dieser Daten wird darauf geachtet, dass Stromstärke und Spannungsabfall nicht nur durch eine Komponente des Materialverbundes ― wie etwa die dünnen metallischen Leiter ― bestimmt werden.
- Bei korrekter Ausführung der Messungen und richtiger Ermittlung des Widerstandes wird ein zutreffender Widerstand für den Materialverbund aus Kohlenstoffmatrix und darin enthaltenen dünnen elektrischen Leitern bestimmt. Dieser Wert wird als "*mittlerer spezifischer elektrischer Widerstand "* bezeichnet.
- Da in Richtung senkrecht zu den Lagen der dünnen elektrischen Leiter durch diese kaum ein erhöhter Strom fließt, kann an dem Materialverbund in dieser Richtung nur der spezifische elektrische Widerstand der Matrix des gebrannten Kohlenstoffes mit wärmebehandeltem Binder festgestellt werden. Der "mittlere spezifische elektrische Widerstand" wird nur parallel zu den Lagen der dünnen elektrischen Leiter festgestellt. Damit ist auch eine Anisotropie des Werkstoffverbundes festgestellt.
- Je nach der Menge der in einer Richtung liegenden Drähte, Litzen oder Bänder ist der mittlere spezifische elektrische Widerstand in dieser Richtung der Lagen höher oder niedriger. Je nach Mengenverteilung der Leiter ist auch parallel zu den Lagen der dünnen elektrischen Leiter eine Anisotropie des Werkstoffverbundes insbesondere bezüglich des mittleren spezifischen elektrischen Widerstandes festzustellen.
- Insbesondere bei Materialverbunden aus metallischen Anteilen und Kohlenstoffanteilen besteht die Gefahr, dass der Strom bevorzugt auf den metallischen Anteilen entlang fließt und dass diese Anteile wegen Überlastung durchbrennen. Bei solch einem Materialverbund beziehungsweise einem daraus hergestellten Bauteil wie etwa einer Schleifleiste ist daher die *Stromtragfähigkeit* eine wichtige Größe zur Charakterisierung. Stromtragfähigkeit ist die Fähigkeit, hohe Ströme ohne unzulässige Schädigung der Schleifleiste und des Fahrdrahtes zu übertragen. Üblicher Weise prüft man die Stromtragfähigkeit, indem das System mit stufenweise stärkerem Strom belastet wird und die sich einstellende Gleichgewichtstemperatur gemessen wird. Figur 1 zeigt Prüfergebnisse von einem metallimprägnierten Kohlenstoff für Schleifleisten; es ist der asymptotische Temperaturanstieg in der Probe nach jeweils vorgegebener Strombelastung von 200A, 300A und 400A über der Zeitachse dargestellt, wobei sich die Strombelastung an der Probendimension orientiert.
   Kommt es in erfindungsgemäßen Schleifleisten etwa nach Durchbrennen von einzelnen Leitungspfaden (dünnen Drähten) zu irreversiblen Schädigungen der Schleifleiste, so ist deren erhöhter Widerstand und damit ihre sich bei Strombelastung einstellende erhöhte Temperatur messbar.

Zur Lösung der Aufgabe wird ein Materialverbund aus einer Matrix von gebranntem Kohlenstoff mit wärmebehandeltem Binder und aus lagenweise enthaltenen dünnen metallischen Leitern realisiert. Die Dichte dieses Materialverbundes ist kleiner oder gleich 2,3g/cm³ und der parallel zu den Lagen der dünnen metallischen Leiter gemessene mittlere spezifische elektrische Widerstand ist kleiner oder gleich 3µΩm.

Die Lösung der Aufgaben wird durch die kennzeichnenden Teile der Ansprüche zwei bis vierzehn in vorteilhafter Weise ausgestaltet.

Gebrannte Kohlenstoffe haben im Gegensatz zu graphitierten Kohlenstoffen eine erheblich höhere Härte und Verschleißfestigkeit und sind deshalb für die Aufgabe der gleitenden Stromabnahme von Fahrdrähten prinzipiell gut geeignet. Diese prinzipiell gute Eignung soll für die Erfüllung der oben genannten Aufgabenstellung genutzt werden. Daher ist es wichtig, eine durchgängige Matrix von gebranntem Kohlenstoff zu realisieren. Bestimmte Optimierungen werden dadurch erreicht, dass Leiter in der Matrix von gebranntem Kohlenstoff in einem möglichst geringen Umfang und mit zielführenden Verteilungen enthalten sind. Ein solcher Werkstoff fällt unter die Gruppe der Materialverbunde. Erfindungsgemäß besteht ein aufgabengerechter Materialverbund darin, dass er den Kohlenstoff in den drei Achsrichtungen eines dreiachsigen, orthogonalen x-y-z-Achssystems als Matrix durchgängig enthält. Zweckmäßiger Weise wird das Achssystem an dem mit Hilfe einer Presstechnik hergestellten Halbzeug ausgerichtet. Dabei liegen die Lagen der dünnen metallischen Leiter im wesentlichen in der x-y-Ebene dieses Achssystems. Die Matrix von gebranntem Kohlenstoff ist in den Bereichen zwischen den Lagen der dünnen metallischen Leiter in den Richtungen der x-y-Ebene ungestört und homogen. Aber auch senkrecht dazu in z-Richtung des orthogonalen Achssystems liegt der gebrannte Kohlenstoff dann homogen vor, wenn er sich zwischen den lagenweise im Verbund enthaltenen, dünnen, metallischen, im Abstand zueinander angeordneten Leitern befindet. Auf diese Weise ist eine in den drei Achsrichtungen eines dreiachsigen, orthogonalen x-y-z-Achssystems durchgängige Matrix von gebranntem Kohlenstoff realisiert.

Der spezifische elektrische Widerstand von Kupfer ist mit 0,017µΩm um den Faktor 2000 geringer als der von gebrannten Kohlenstoffen, die typischer Weise zwischen 30µΩm und 50µΩm aufweisen. Wenn ein durchgängiger Kontakt der metallischen Komponenten untereinander gesichert ist, benötigt man relativ kleine Mengen an metallischem Additiv, um den relativ hohen spezifischen elektrischen Widerstand von gebrannten Kohlenstoffen auf ein deutlich niedrigeres Niveau zu senken. Erfindungsgemäß enthält der Werkstoffverbund weniger als 5Vol% Metalle.

Die am besten elektrisch leitfähigen und zugleich wirtschaftlich bedeutsamen Metalle sind Aluminium und Kupfer. Da gebrannte Kohlenstoffe in der Regel bei maximalen Temperaturen um 1000°C behandelt werden, scheidet Aluminium wegen seines Schmelzpunktes von etwas über 650°C als elektrisch gut leitfähiges Metall zur Verbesserung des Materialverbundes aus. Einerseits würde die Aluminiumschmelze beim Brennen der Kohlenstoffe unkontrolliert in den Poren des Kohlenstoffes wandern, andererseits müsste mit Aluminiumcarbidbildung gerechnet werden. Beide Effekte wären nachteilig für die Erzeugung einer zweckdienlichen Werkstoffstruktur.
Kupfer und Kupferlegierungen sind zur Lösung der Aufgabe gut geeignete metallische Leiter. Sie sind in Form von Drähten, Litzen oder Bändern mit Dicken von weniger als 0,3 mm im Materialverbund enthalten.

Die bei der Herstellung des Materialverbundes eingesetzte Presstechnik legt es nahe, die dünnen metallischen Leiter in Lagen in die Pressform einzubringen. Durch die dann folgenden Herstellungsschritte wird die Anordnung der dünnen metallischen Leiter im Materialverbund nicht mehr verändert und man erzeugt nach Durchlaufen der ganzen Prozesskette einen Rohling beziehungsweise eine Schleifleiste mit lagenweise angeordneten Leitern. Die dünnen metallischen Leiter sind in verschiedenen Varianten im Materialverbund enthalten:
In einer Variante sind die dünnen metallischen Leiter als einzelne Drähte, Litzen oder Bänder im Materialverbund beziehungsweise in der Schleifleiste enthalten. Dabei sind gemäß der durchgängigen Matrix von gebranntem Kohlenstoff im Materialverbund die einzelnen Drähte, Litzen oder Bänder innerhalb einer Lage nicht dicht an dicht sondern mit Abständen im wesentlichen unidirektional einzeln oder scharweise angeordnet.
In einer anderen Variante sind die dünnen metallischen Leiter als einzelne Drähte, Litzen oder Bänder in mindestens zwei dünnen, unmittelbar aufeinander folgenden, sich kontaktierenden jedoch unterschiedlich orientierten Lagen angeordnet, wobei die Leiter jeder Lage im wesentlichen unidirektional einzeln oder scharweise aber auch nicht dicht an dicht angeordnet sind. Im Ergebnis ist eine solche Doppel- oder Mehrfachlage ein multidirektionaler Leiter.
In einer anderen Variante sind die dünnen metallischen Leiter als einzelne Drähte, Litzen oder Bänder zu bi- oder multidirektionalen Gitter-Geweben oder ∼Geflechten mit lichten Leiterabständen von mindestens 0,3mm verarbeitet und als solche im Materialverbund beziehungsweise in der Schleifleiste enthalten.

Ein Materialverbund beziehungsweise eine daraus hergestellte Schleifleiste enthält mindestens zwei Lagen dünner metallischer Leiter, wobei mindestens 40% der Fläche der die dünnen metallischen Leiter enthaltenden Lagen vom Kohlenstoffinaterial durchsetzt sind. Die Lagen der dünnen metallischen Leiter sind innerhalb des Materialverbundes im wesentlichen parallel zueinander angeordnet.

Der Materialverbund aus gebranntem Kohlenstoff und darin enthaltenen dünnen metallischen Leitern hat wegen des Metallanteiles eine höhere elektrische Leitfähigkeit als ein gebrannter Kohlenstoff ohne einen Anteil dünner metallischer Leiter. Entsprechend ist die Stromtragfähigkeit je stromdurchflossener Einheitsfläche bei dem Materialverbund größer.
Eine aus dem Materialverbund gefertigte Schleifleiste mit einem typischen Querschnitt von 22 x 35mm² hat eine Stromtragfähigkeit von mindestens 500 Ampere je Schleifleiste im Gegensatz zu weniger als 140 Ampere je Schleifleiste bei gebranntem Kohlenstoff ohne einen Anteil dünner metallischer Leiter.

Die Herstellung eines Materialverbundes und eines daraus herzustellenden Bauteils ist durch folgende Schritte gekennzeichnet:
a) Abwechselndes Einbringen von Lagen aus Körnung von Kohlenstoffpartikeln mit wärmebehandeltem Binder und mindestens zwei Lagen mit dünnen metallischen Leitern in eine Pressform,
b) Verpressen der in die Pressform eingebrachten Lagen,
c) Entnehmen des verdichteten, grünen Formkörpers aus der Pressform,
d) Brennen des zunächst grünen Formkörpers unter dem Schutzgas Wasserstoff,
e) Zerschneiden des aus dem erfindungsgemäßen Materialverbund bestehenden gebrannten Formkörpers in lange Quader, die die dünnen metallischen Leiter in der gewünschten Orientierung enthalten und die auf die gewünschten Endmaße der Schleifleisten bearbeitet werden.

Neben dieser konventionellen Technik wird auch eine sehr viel rationellere Herstellungstechnik eingesetzt, die einerseits eine größere im Markt absetzbare Stückzahl von Schleifleisten und andererseits einen bedeutend höheren Investitionsbetrag in die Fertigungseinrichtungen voraussetzt. Bei der Pultrusion werden dem formgebenden Mundstück Kupferbänder zugeführt, die von einer plastischen Masse bestehend aus organischem Bindemittel und (Kohlenstoff-)Feststoff umgeben sind. Dieser alternativen Methode in der Grünfertigung folgen die konventionellen Schritte des Brennens, Zerteilens und Bearbeitens.

Die Orientierung der Lagen mit den dünnen metallischen Leitern im Materialverbund wurde an Hand des dreiachsigen, orthogonalen x-y-z-Achssystems beschrieben, welches sich an der Pressrichtung bei der Herstellung des Materialverbundes ausrichtet. Wenn aus einem solchen Materialverbund als Rohlinge für die Schleifleisten längliche Quader herausgeschnitten werden, dann ist auf die richtige Orientierung der Rohlinge zu achten. In den aus den Rohlingen hergestellten, fertig bearbeiteten und auf Pantographen montierten Schleifleisten sind die dünnen metallischen Leiter so orientiert, dass sie einerseits die Stromzuführung bzw. den Fahrdraht und andererseits den Schleifleistenträger bzw. die Stromanschlussbolzen des Pantographen kontaktieren. Mit einer solchen Orientierung der dünnen metallischen Leiter ist gewährleistet, dass die länglichen Schleifleisten bei der gleitenden Stromabnahme zwecks Betrieb von Fahrzeugen mit Elektromotoren ihre Aufgabe bei niedrigem mittleren spezifischen elektrischen Widerstand bei zugleich niedriger Dichte erfüllen.

Durch die Figuren wird die Erfindung beispielhaft weiter erläutert. Es zeigen:
- Fig. 1:: Diagramm zur Stromtragfähigkeit,
- Fig. 2:: Innere Struktur des Materials einer aufgebrochenen Schleifleiste mit Gittergeweben,
- Fig. 3:: Schleifleiste im eingebauten Zustand zwischen Fahrdraht und dem Schleifleistenträger auf dem Pantographen,
- Fig. 4:: Diagramm zur Stromtragfähigkeit einer Schleifleiste mit Gittergewebe und einem parallel zur Gittergewebe-Ebene gemessenen Stromfluss und
- Fig. 5:: Diagramm zur Erhöhung der Beharrungstemperaturen verschiedener Schleifleisten-Werkstoffe in Abhängigkeit von der Stromdichte.

### Beschreibung der Figuren:

Im Diagramm der Fig. 1 ist die Temperatur über der Zeitachse aufgetragen. Die dargestellten Kurven geben die an einer Schleifleistenprobe aus einem metallimprägnierten Kohlenstoff gemessenen Temperaturverläufe wieder, wobei je eine Kurve von einem links, in der Mitte und rechts an der Probe sitzenden Temperaturfühler stammt. Die Kurvenverläufe kommen wie folgt zustande: Die Probe wird zunächst von einem Strom mit 200A durchflossen. Durch den Gesamtwiderstand der Probe erwärmt sie sich zunächst relativ rasch von Raumtemperatur innerhalb von etwa acht Minuten auf 60 bis 70°C. Danach steigt die Temperatur nur noch schwach weiter und erreicht nach etwa 50 Minuten asymptotisch 80°C bzw. 87°C.
Dann wird auf die Probe ein Strom von 300A gegeben. Sie erwärmt sich wieder relativ rasch innerhalb von etwa acht Minuten weiter auf etwa 110 bis 130°C. Danach steigt die Temperatur nur noch schwach weiter und erreicht nach etwa einer Stunde und 15 Minuten asymptotisch Temperaturen zwischen 140°C und 155°C. Die Differenz der Beharrungstemperaturen ist auf diesem Niveau deutlich größer als bei den durch 200A ausgelösten Beharrungstemperaturen.
Dann wird auf die Probe ein Strom von 400A gegeben. Sie erwärmt sich wieder relativ rasch innerhalb von etwa acht Minuten weiter. Danach steigt die Temperatur nur noch schwach weiter und erreicht nach etwa zwei Stunden asymptotisch Temperaturen zwischen 210°C und 250°C. Die Differenz der Beharrungstemperaturen von den verschiedenen Messpunkten ist auf diesem Niveau nochmals größer als bei dem durch 300A ausgelösten Beharrungstemperaturen. Das Diagramm endet bei Ablauf von 2 Stunden und 30 Minuten.

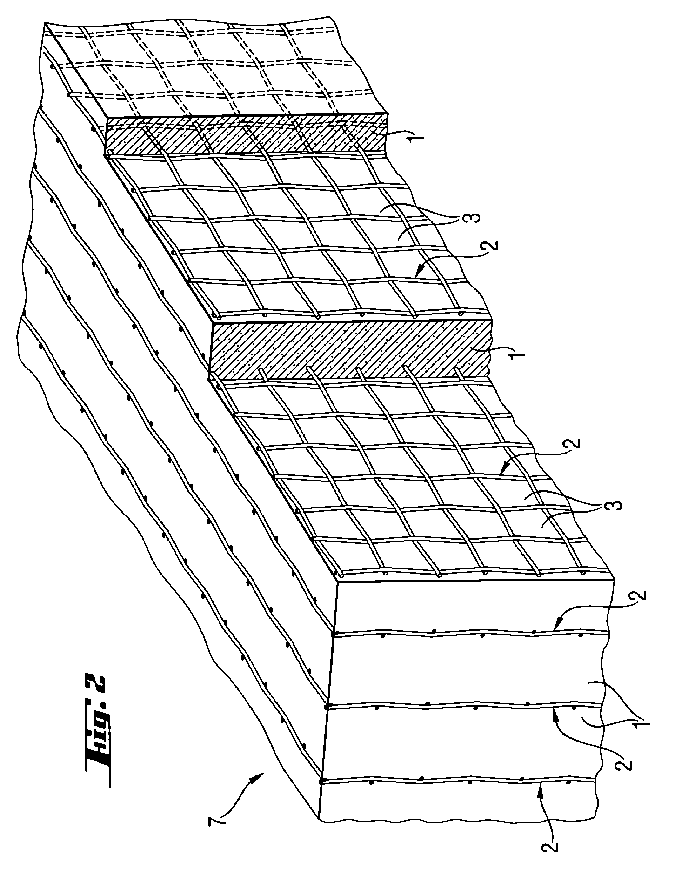

In Figur 2 wird ein Blick in die innere Struktur des Materials einer aufgebrochenen Schleifleiste 7 aus Kohlenstoff 1 gegeben, die von Gittergewebe 2 aus dünnen metallischen Leitern durchsetzt ist. Diese Gittergewebe 2 sind lagenweise in die Kohlenstoffinatrix 1 eingebettet. Die lichte Weite der Maschen 3 des Gittergewebes 2 wird je nach Bedarf an elektrischer Leitfähigkeit gewählt. Das Gleiche gilt für die lichte Länge und lichte Breite der Maschen 3. Weitere Parameter zur Dimensionierung der elektrischen Leitfähigkeit sind Drahtquerschnitt und Häufigkeit der Lagen der Gittergewebe 2 je Schleifleiste 7.

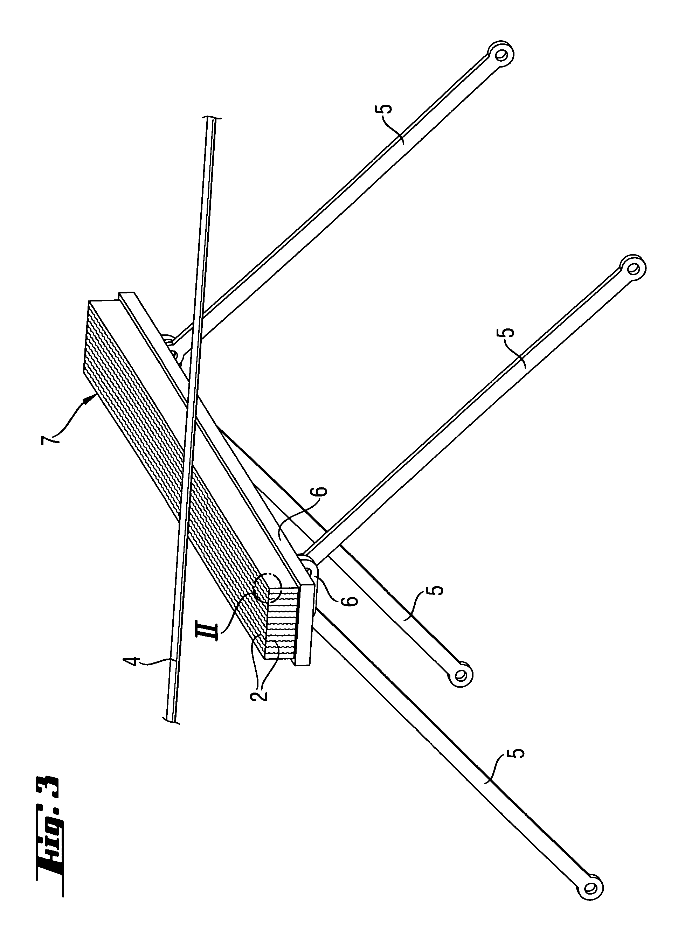

Bei der nach Figur 2 vorgenommenen Orientierung der Gittergewebe 2 ist es klar, dass die elektrische Leitfähigkeit des Schleifleistenmaterials in der Ebene der Gittergewebe 2 besser ist als senkrecht zur Ebene der Gittergewebe 2. Entsprechend ist der mittlere spezifische elektrische Widerstand des Schleifleistenmaterials in der Ebene der Gittergewebe 2 niedriger als senkrecht zur Ebene der Gittergewebe 2. Daher ist ein funktionsgerechter Einbau des Materialverbunds auf dem Schleifleistenträger 6 eines Pantographen 5 wesentlich. Fig. 2 zeigt vergrößert einen Ausschnitt der Fig. 3, der dort mit II bezeichnet ist.

Figur 3 zeigt die Einbausituation einer Schleifleiste 7 aus dem erfindungsgemäßen Materialverbund. Der elektrische Strom kommt über den Fahrdraht 4 in die Schleifleiste 7. Diese ist so orientiert, dass die Gittergewebe 2 einerseits stets den Fahrdraht 4 erreichen und andererseits den (elektrischen) Kontakt zum Schleifleistenträger 6 herstellen. Der Schleifleistenträger 6 wird vom Pantographen 5 getragen.

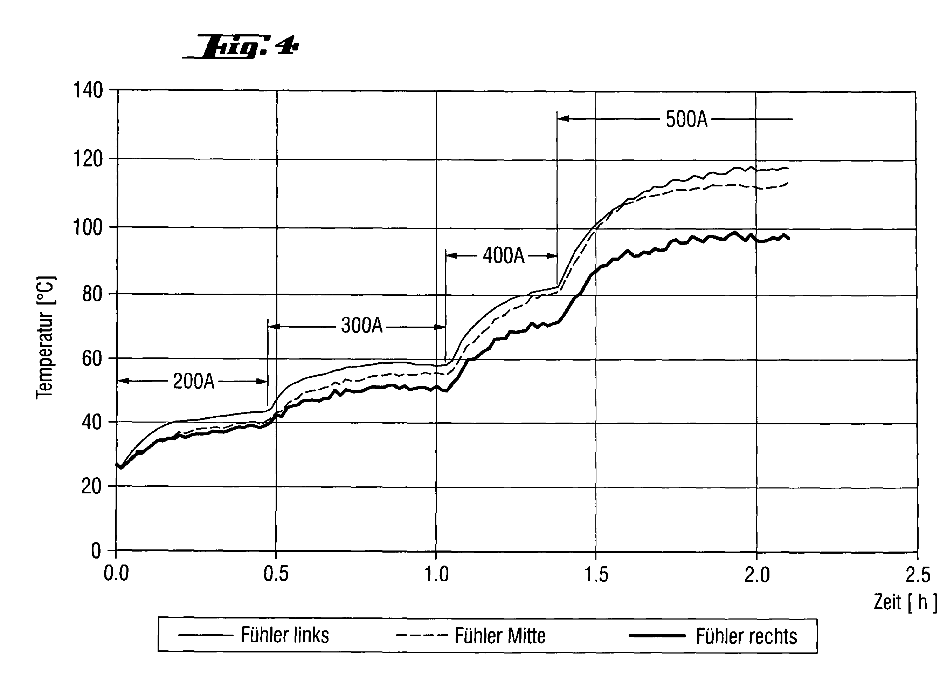

Im Diagramm der Fig. 4 ist die Temperatur über der Zeitachse aufgetragen, vergleiche auch Fig. 1. Die dargestellten Kurven geben die an einer erfindungsgemäßen Schleifleistenprobe aus einem Kohlenstoff 1 mit Lagen von Gittergeweben 2 gemessenen Temperaturverläufe wieder, wobei je eine Kurve von einem links, in der Mitte und rechts an der Probe sitzenden Temperaturfühler stammt. Die Gittergewebe 2 in der Probe haben eine solche Einbausituation in der Prüfapparatur, die der der Figur 3 entspricht; die Gittergewebe 2 kontaktieren die Stromzufuhr und die Stromableitung. Die Kurvenverläufe kommen entsprechend der Beschreibung zu Figur 1 zustande.
Folgender Vergleich zur Leistungsfähigkeit des erfindungsgemäßen Materialverbundes ist aufschlussreich: Man sieht im Diagramm der Figur 1 bei einer Strombelastung mit 400A eine Beharrungstemperatur von 210 bis 250°C, festgestellt an einer metallimprägnierten Kohlenstoffprobe. Vergleicht man die Beharrungstemperaturen bei der Strombelastung mit 400A der Figur 4, so sieht man, dass nur 70 bis 85°C erreicht werden, festgestellt an einer erfindungsgemäßen Kohlenstoffprobe. Ursache dieser viel niedrigeren Temperaturen sind die erfindungsgemäßen Lagen dünner metallischer Leiter, z. B. die metallischen Gittergewebe 2, und ihre zweckmäßige Orientierung.
Im Übrigen ist aus Figur 4 abzulesen, dass der erfindungsgemäße Materialverbund für die Schleifleisten 7 eine Stromtragfähigkeit von 500A hat, denn auch nach über zwei Stunden Einsatzdauer und einer Strombelastung von 500A bleibt die Beharrungstemperatur der Probe unter 120°C.

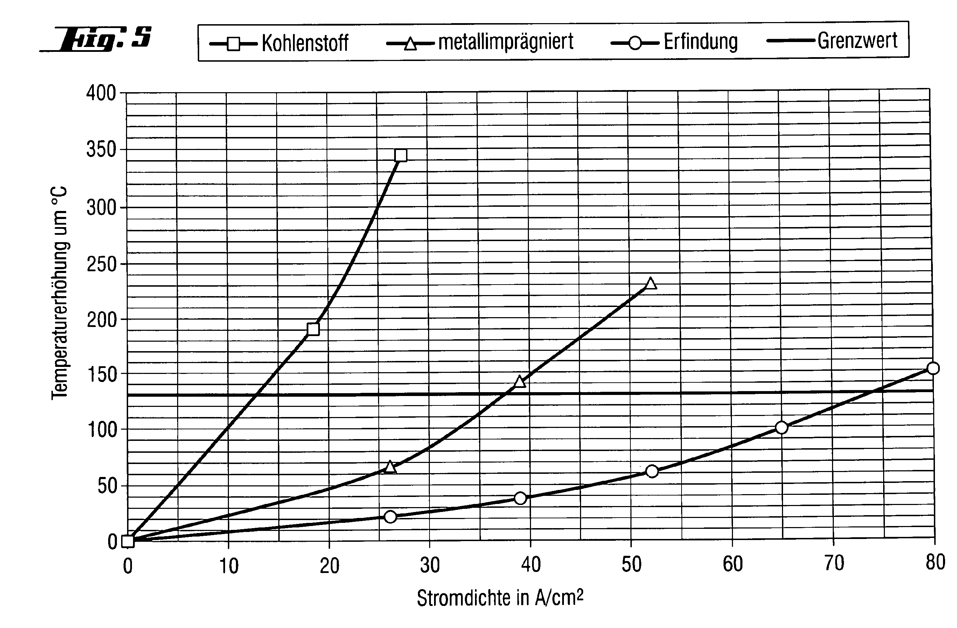

Im Diagramm der Fig. 5 ist die Erhöhung der Beharrungstemperaturen verschiedener Schleifleisten-Werkstoffe ― gemessen an Schleifleistenproben mit Querschnitten von 35 x 22mm² - in Abhängigkeit von der Stromdichte aufgetragen. Die am steilsten ansteigende Kurve stammt von einem konventionellen, nur aus Kohlenstoff bestehenden Material, die Kurve mit mittlerer Steigung stammt von einem konventionellen, metallimprägnierten Kohlenstoff-Werkstoff für Schleifleisten und die am geringsten ansteigende Kurve stammt von einer erfindungsgemäßen Schleifleistenprobe aus einem Kohlenstoff 1 mit Lagen von Gittergeweben 2. An den Schnittpunkten dieser drei Kurven jeweils mit der 130°C-Geraden für die Erhöhung der Beharrungstemperatur (Grenzwert) lassen sich die kritischen Stromdichten (A/cm²) für die drei Schleifleisten-Werkstoffe ablesen. Diese Stromdichten werden in den folgenden Beispielen genannt.

### Beispiele

Es wurden als Feststoffe 64Gew.-% Koks und 16Gew.-% Graphit mit dem Bindemittel aus 20Gew.-% Phenolharz vom Typ Novolak und dem Härter Hexamethylentetramin gemischt, wobei die Feststoffe in Körnungen von unter 100µm vorlagen. Aus dieser Mischung wurden in einem Gesenk Platten mit den Abmessungen 350 x 150 x 42mm³ unter Anwendung eines Druckes von 200MPa gepresst. Die Platten enthielten in gleichmäßigen Abständen zueinander 12 Lagen Gittergewebe aus Kupferdrähten, womit der Metallgehalt der Platten 4 Vol.-% beträgt. Das Gittergewebe hatte eine Maschenweite von 1mm und der Drahtdurchmesser betrug 0,3mm.

Nach dem Pressen wurden die grünen Platten unter Wasserstoff und Normaldruck mit einem Gradienten von 10°C/h auf 950°C aufgeheizt. Nach diesem Brennvorgang wurden unter anderem Dichte, mittlerer spezifischer elektrischer Widerstand nach DIN IEC 413 und Stromtragfähigkeit an einem Probenquerschnitt von 35 x 22mm² gemessen. Es zeigten sich folgende Werte für ein Profil 35 x 22mm², siehe auch Figur 4:
◆ Dichte 1,80g/cm³,
◆ mittlerer spezifischer elektrischer Widerstand 1,50µΩm,
◆ Stromtragfähigkeit bei einer Erhöhung der Beharrungstemperatur um 130°C 570A,
◆ entsprechend einer Stromdichte von 74A/cm².

Zum Vergleich zeigte ein konventionelles, nur aus Kohlenstoff bestehendes Material für Schleifleisten mit einem Querschnitt von 35 x 22mm² folgende Werte:
◆ Dichte 1,70g/cm³,
◆ mittlerer spezifischer elektrischer Widerstand 3 bis 5µΩm,
◆ Stromtragfähigkeit bei einer Erhöhung der Beharrungstemperatur um 130°C 100A,
◆ entsprechend einer Stromdichte von 13A/cm².

Ein konventionelles, metallimprägniertes Kohlenstoff-Material für Schleifleisten mit einem Querschnitt von 35 x 22mm² zeigt folgende Werte, siehe auch Figur 1:
◆ Dichte 3,1g/cm³,
◆ mittlerer spezifischer elektrischer Widerstand 4µΩm,
◆ Stromtragfähigkeit bei einer Erhöhung der Beharrungstemperatur um 130°C 285A,
◆ entsprechend einer Stromdichte von 37A/cm².

Zur Bewertung dieser Zahlen sei angemerkt, dass verschiedene Bahnbetriebsgesellschaften folgende kritischen Richtwerte bei Stillstandstests ihrer Fahrzeuge verwenden:
◆ Stromtragfähigkeit bei einer kritischen Erhöhung der Beharrungstemperatur um 130°C rund 400A,
◆ entsprechend - bei einem Querschnitt von 35 x 22mm² - einer kritischen Stromdichte von 52A/cm².

Damit sind sowohl das konventionelle, nur aus Kohlenstoff bestehende Material als auch das konventionelle, metallimprägnierte Kohlenstoff-Material für Schleifleisten wegen Überschreitung der kritischen Beharrungstemperatur nicht uneingeschränkt zulässig.

### Bezugszeichenliste

- 1: Kohlenstoffmatrix
- 2: Gittergewebe aus dünnen metallischen Leitern
- 3: Maschen
- 4: Stromzuführung bzw. Fahrdraht
- 5: Pantograph
- 6: Schleifleistenträger
- 7: Schleifleiste

## Patentansprüche

1. Materialverbund für Schleifleisten (7) zur gleitenden Stromabnahme zwecks Betrieb von Fahrzeugen mit Elektromotoren, bestehend aus einer Matrix von gebranntem Kohlenstoff (1) mit wärmebehandeltem Binder und aus lagenweise darin enthaltenen dünnen metallischen Leitern **dadurch gekennzeichnet, dass** dieser Materialverbund
- eine Dichte von kleiner oder gleich 2,3g/cm³ und
- einen parallel zu den Lagen der dünnen metallischen Leiter gemessenen mittleren spezifischen elektrischen Widerstand von kleiner oder gleich 3µΩm hat.

2. Materialverbund nach Anspruch 1 **dadurch gekennzeichnet, dass** er den homogenen Kohlenstoff 1 in den drei Achsrichtungen eines dreiachsigen, orthogonalen Achssystems als Matrix durchgängig enthält.

3. Materialverbund nach Ansprüchen 1und 2 **dadurch gekennzeichnet, dass** er eine Stromtragfähigkeit hat, die bei einer Stromdichte von bis zu 74A/cm² eine Erhöhung der Beharrungstemperatur von kleiner oder gleich 130°C hervorbringt.

4. Materialverbund nach Ansprüchen 1 bis 3 **dadurch gekennzeichnet, dass** er weniger als 5Vol.-% Metallgehalt enthält.

5. Materialverbund nach Ansprüchen 1 bis 4 **dadurch gekennzeichnet, dass** er Leiter aus Kupfer oder Kupferlegierungen enthält.

6. Materialverbund nach Ansprüchen 1 bis 5 **dadurch gekennzeichnet, dass** die metallischen Leiter in diesem Verbund Drähte, Litzen oder Bänder mit Dicken von weniger als 0,3 mm sind.

7. Materialverbund nach Ansprüchen 1 bis 6 **dadurch gekennzeichnet, dass** die metallischen Leiter in diesem Verbund lagenweise angeordnet sind.

8. Materialverbund nach einem oder mehreren der Ansprüche 1 bis 7 **dadurch gekennzeichnet, dass** die metallischen Leiter in einer Lage im wesentlichen unidirektional einzeln oder scharweise, jeweils mit Abständen im Kohlenstoffinaterial (1) angeordnet sind.

9. Materialverbund nach einem oder mehreren der Ansprüche 1 bis 8 **dadurch gekennzeichnet, dass** die metallischen Leiter in einer Lage im wesentlichen multidirektionale Leiter sind.

10. Materialverbund nach einem oder mehreren der Ansprüche 1 bis 9 **dadurch gekennzeichnet, dass** die metallischen Leiter in einer Lage bi- oder multi-direktionale (Gitter-)Gewebe (2) oder Geflechte mit lichten Leiterabständen von mindestens 0,3mm sind.

11. Materialverbund nach einem oder mehreren der Ansprüche 1 bis 10 **dadurch gekennzeichnet, dass** er mindestens zwei Lagen dünner metallischer Leiter enthält, wobei mindestens 40% der Fläche der die dünnen metallischen Leiter enthaltenden Lagen vom Kohlenstoffinaterial (1) durchsetzt sind.

12. Materialverbund nach einem oder mehreren der Ansprüche 1 bis 11 **dadurch gekennzeichnet, dass** die Lagen der dünnen metallischen Leiter im wesentlichen parallel zueinander angeordnet sind.

13. Verfahren zur Herstellung eines Materialverbundes ― nach einem oder mehreren der Ansprüche 1 bis 12 - und eines daraus herzustellenden Bauteils, **gekennzeichnet durch** folgende Schritte:
a) Abwechselndes Einbringen von Lagen aus Körnung von Kohlenstoffpartikeln mit wärmebehandeltem Binder und mindestens zwei Lagen mit dünnen metallischen Leitern in eine Pressform,
b) Verpressen der in die Pressform eingebrachten Lagen,
c) Entnehmen des verdichteten, grünen Formkörpers aus der Pressform,
d) Brennen des zunächst grünen Formkörpers unter dem Schutzgas Wasserstoff,
e) Zerschneiden des aus dem erfindungsgemäßen Materialverbund bestehenden gebrannten Formkörpers in lange Quader, die die dünnen metallischen Leiter in der gewünschten Orientierung enthalten und die auf die gewünschten Endmaße der Schleifleisten bearbeitet werden.

14. Verwendung von aus dem Materialverbund hergestellten länglichen Schleifleisten - zur gleitenden Stromabnahme zwecks Betrieb von Fahrzeugen mit Elektromotoren - nach einem oder mehreren der Ansprüche 1 bis 13 in der Weise, dass die in die Schleifleisten eingebundenen dünnen metallischen Leiter einerseits die Stromzuführung bzw. den Fahrdraht (4) und andererseits den Schleifleistenträger (6) bzw. die Stromanschlussbolzen des Pantographen (5) kontaktieren.
